# EUROPEAN PATENT APPLICATION

(11) **EP 2 679 330 A1**
(43) Date of publication of application: **01.01.2014**
(21) Application number: 12748924.3
(22) Date of filing: 17.02.2012
(51) Int. Cl.: B23K 20/12, B29C 65/06

(54) **METHOD FOR BONDING METAL MEMBER AND RESIN MEMBER**

(30) Priority: 21.02.2011 JP 2011035001
(71) Applicant: Showa Denko K.K., Tokyo 105-8518 (JP); Furukawa-Sky Aluminum Corp., Chiyoda-ku Tokyo 101-8970 (JP); Osaka University, Suita-shi, Osaka 565-0871 (JP)
(72) Inventor: NAGANO Yoshitaka, Oyama-shi Tochigi 323-8678 (JP); OKADA Toshiya, Tokyo 101-8970 (JP); NAKATA Kazuhiro, Suita-shi Osaka 565-0871 (JP)
(74) Representative: Viering, Jentschura & Partner
(86) International application number: PCT/JP2012/053839
(87) International publication number: WO 2012/115010

(57) **Abstract**

A metal member 1 and a resin member 2 are brought into contact with each other without interposing a resin layer between the metal member 1 and the resin member 2. A rotation tool 10, which is being rotated, is pressed against the surface 1a of the metal member 1 in an inclined state so that the inclination angle θ of the axis Q of the rotation tool 10 relative to the normal line P of the surface 1a of the metal member 1 satisfies the condition of 0°<θ≦5°. This applies friction energy to the metal member 1 to join the metal member 1 and the resin member 2.

## Description

### TECHNICAL FIELD

The present invention relates to a method for bonding a metal member and a resin member, and also to a bonded joint of a metal member and a resin member.

### TECHNICAL BACKGROUND

As a method for bonding an inorganic material member such as a metal member and a thermoplastic resin member, a bonding method performed by using various types of adhesive agents and a bonding method performed by heating and melting a thermoplastic resin member are known.

In many bonding methods using adhesive agents, a resin composition dissolved in an organic solvent is applied to a bonding surface in a low viscose state, and then dried to solidify the resin composition. This method is not preferable from the viewpoint of, e.g., preventing air pollution and global warming since organic solvents will be discharged into the atmosphere with this method. Furthermore, in the case of an adhesive agent including a thermoplastic resin, especially a resin with low surface tension typified by a polyolefin series nonpolar resin or a fluoric resin, it is difficult to obtain a sufficient adhesive strength. A hot-melt type adhesive agent has an advantage that no organic solvent is required, but has disadvantages that it is not very high in adhesive strength and it is difficult to obtain a large bonding area since application and bonding should be completed before the adhesive agent cools down.

Bonding methods performed by heating and melting a thermoplastic resin member include an ultrasonic bonding method performed by heating, a thermal bonding method performed by high-frequency induction heating, a thermal bonding method performed by an external heat source, and a bonding method performed by contacting a resin in a melted state and an inorganic material when melting and forming the resin itself. Any of these bonding methods are advantageous in that organic solvents are not needed and strong adhesion can be obtained quickly since adhesion can be attained by merely heating and cooling the materials themselves. Among these bonding methods, the ultrasonic bonding method, in which bonding is performed using supersonic vibrations and pressure applied to the inorganic/resin interface by pressing an ultrasound transducer called a horn against a resin member. In this ultrasonic jointing method, it was difficult to form a continuously extended bonded portion. Furthermore, in the ultrasonic bonding method, bonding is performed by pressing a horn against the resin member with pressure to transmit ultrasonic energy to the portion to be bonded. Therefore, there is a problem that the ultrasonic bonding method cannot be used when the resin member is thick. As a thermal bonding performed by high-frequency induction heating, there are a bonding method performed by heating a metal member using eddy currents and a bonging method performed by heating a metal member using dielectric losses of the resin member. The bonding methods performed by heating the metal member can be applied to, e.g., a bonded joint of steel pipes, but there are problems that there is a limitation on the size of coils and that the shape of the bonded joint is limited to a simple shape such as a pipe.

In recent years, methods for bonding using friction energy have been developed, and methods for bonding using friction energy have been under consideration for bonding an aluminum member and a resin member. For example, Japanese Unexamined Laid-open Patent Application Publication No. 2009-279858 (Patent Document 1) discloses a method for bonding an aluminum member and a thermoplastic resin member. The bonding method will be briefly explained below.

Initially, a thermoplastic resin layer compatible with a thermoplastic resin member and having a thickness of 0.1 µm to 50 µm is formed on a surface of an aluminum member. Next, the aluminum member is overlapped with a resin member with the resin layer of the aluminum member facing the resin member. Then, a cylindrical rotation tool, which is being rotated, is pressed against the aluminum member from the aluminum member side to generate frictional heat to thereby melt both the resin layer and the resin member by heating the contact interface of the resin layer and the resin member by the friction heat. After that, the resin layer and the resin member are cooled to be integrated, thereby bonding the aluminum member and the resin member.

### PRIOR ART DOCUMENT

Patent Document 1: Japanese Unexamined Laid-open Patent Application Publication No. 2009-279858

### DISCLOSURE OF THE INVENTION

### PROBLEMS TO BE SOLVED BY THE INVENTION

In this bonding method, it is required that the resin of the resin layer formed on the surface of the aluminum member is a modified resin for enhancing the adhesion to the aluminum member. Also, since the bonding force is obtained by melting the two resins, the type of bondable resin is limited. Furthermore, since the resin member is bonded only to the portion where the resin layer is formed among the entire surface of the aluminum member, the bonding portion of the resin member to the aluminum member is limited.

The present invention was made in view of the aforementioned technical background, and aims to provide a method for bonding a metal member and a resin member which is capable of directly bonding them without interposing a resin layer therebetween, and also aims to provide a bonded joint of a metal member and a resin member.

The other objects and advantages of the present invention will be apparent from the following preferred embodiments.

### MEANS TO SOLVE THE PROBLEMS

The present invention provides the following means.

[1] A method for bonding a metal member and a resin member, the method comprising:
arranging the metal member and the resin member in contact with each other without interposing a resin layer therebetween; and
pressing a rotation tool, which is being rotated, against a surface of the metal member in an inclined state so that an inclination angle θ of an axis of the rotation tool relative to a normal line of the surface of the metal member satisfies a condition of 0° <θ ≦ 5° to thereby bond the metal member and the resin member by friction energy given to the metal member.

[2] The method for bonding a metal member and a resin layer as recited in Item 1, wherein the rotation tool satisfies a condition of 5t ≦ D ≦ 20t, where 'D' is a diameter of a tip end face of the rotation tool, and 't' is a thickness of the metal member.

[3] The method for bonding a metal member and a resin layer as recited in Item 1 or 2, wherein the rotation tool is pressed against the surface of the metal member in an atmosphere.

[4] The method for bonding a metal member and a resin layer as recited any one of Items 1 to 3, wherein a contact interface of the metal member and the resin member is heated to a temperature equal to or higher than a melting point of the resin member but below a melting point of the metal member by the friction energy to bond the metal member and the resin member.

[5] The method for bonding a metal member and a resin layer as recited in any one of Items 1 to 4, wherein, in a state in which the rotation tool is pressed against the surface of the metal member in an inclined state, the rotation tool is moved relative to the metal member in a direction opposite to a direction of an inclination of the rotation tool.

[6] The method for bonding a metal member and a resin layer as recited in any one of Items 1 to 5, wherein a probe having a diameter smaller than a diameter of a tip end face of the rotation tool is protruded from the tip end face, and wherein the metal member and the resin member are bonded by the friction energy and second friction energy generated by stirring a material of the metal member with the probe embedded into the metal member when pressing the rotation tool against the metal member.

[7] The method for bonding a metal member and a resin layer as recited in any one of Items 1 to 6, wherein the metal member and the resin member are brought into contact with each other in an overlapped manner without interposing a resin layer therebetween.

[8] The method for bonding a metal member and a resin layer as recited in any one of Items 1 to 4, wherein the metal member and the resin member are brought into contact with each other in an overlapped manner without interposing a resin layer therebetween, and wherein the rotation tool is pressed against the surface of the metal member in an inclined state, and thereafter pressing of the rotation tool against the metal member is released without moving the rotation tool relative to the metal member in a direction parallel to the surface of the metal member to thereby lap spot weld the metal member and the resin member.

[9] The method for bonding a metal member and a resin layer as recited in Item 8, wherein a probe having a diameter smaller than a diameter of a tip end face of the rotation tool is protruded from the tip end face, and wherein the metal member and the resin member are bonded by the friction energy and a second friction energy generated by stirring a material of the metal member with the probe embedded into the metal member when pressing the rotation tool against the metal member.

[10] The method for bonding a metal member and a resin layer as recited in any one of Items 1 to 6, wherein the metal member and the resin member are brought into contact with each other in an abutted state without interposing a resin layer therebetween.

[11] The method for bonding a metal member and a resin layer as recited in any one of Items 1 to 10, wherein a contact face of the metal member which comes into contact with the resin member is subjected to an anodizing treatment.

[12] The method for bonding a metal member and a resin layer as recited in any one of Items 1 to 11, wherein at least one of mutual contact surfaces of the metal member and the resin member is subjected to a corona discharge treatment before bonding.

[13] A bonded joint of a metal member and a resin member obtained by the method for bonding a metal member and a resin layer as recited in any one of Items 1 to 12.

### EFFECT OF THE INVENTION

The present invention exerts the following effects.

In the bonding method according to the aforementioned Item [1], since a metal member and a resin member are brought into contact with each other without interposing a resin layer therebetween, bonding can be conducted less costly and easily for not using a resin layer, and the number of types of resin members that are bondable to a metal member increases. Furthermore, a metal member and a resin member can be bonded at an arbitrary position.

Additionally, by pressing a rotation tool, which is being rotated, against a surface of the metal member in an inclined state so that an inclination angle θ of an axis of the rotation tool relative to a normal line of the surface of the metal member satisfies a condition of 0° <θ ≦ 5°, friction energy per unit area needed for bonding can be secured, thereby enabling strong bonding of the metal member and the resin member and preventing deterioration of the bonding strength due to thinning of the metal member.

In the bonding method according to the aforementioned Item [2], since the rotation tool satisfies the predetermined condition, metal members of various thicknesses can be firmly and assuredly bonded to resin members.

In the bonding method according to the aforementioned Item [3], since the rotation tool is pressed against the surface of the metal member in the atmosphere, a metal member and a resin member can be firmly bonded even if the material of the resin member does not contain a polar group such as a hydroxyl group or a carboxyl group.

In the bonding method according to the aforementioned Item [4], by heating a contact interface of the metal member and the resin member to a temperature equal to or higher than a melting point of the resin member but below a melting point of the metal member by friction energy, the metal member and the resin member can be further assuredly bonded.

In the bonding method according to the aforementioned Item [5], by moving the rotation tool relative to the metal member in a state in which the rotation tool is inclined and pressed against the surface of the metal member, the bonded portion of the metal member and the resin member can be formed linearly, thereby improving the bonding strength of the metal member and the resin member. Furthermore, since the relative moving direction of the rotation tool relative to the metal member is opposite to a direction of the inclination of the rotation tool, the surface of the metal member can be prevented from being cut with the front side of the rotation tool in the bonding direction, thereby assuredly applying friction energy to the metal member.

In the bonding method according to the aforementioned Item [6], the total amount of friction energy applied to the metal member can be increased. As a result, even if the metal member is thick or the contact interface of the metal member and the resin member is significantly separated from the contact portion of the metal member with which the rotation tool comes into contact, the contact interface of the metal member and the resin member can be assuredly heated, thereby allowing the metal member and the resin member to be further assuredly and firmly bonded.

In the bonding method according to the aforementioned Item [7], a lap joint of the metal member and the resin member can be obtained.

In the bonding method according to the aforementioned Item [8], the metal member and the resin member can be assuredly lap spot welded.

In the bonding method according to the aforementioned Item [9], the total amount of friction energy applied to the metal member can be increased. As a result, even if the metal member is thick or the contact interface of the metal member and the resin member is significantly separated from the contact portion of the metal member with which the rotation tool comes in contact, the contact interface of the metal member and the resin member can be assuredly heated, thereby allowing the metal member and the resin member to be further assuredly and firmly bonded.

In the bonding method according to the aforementioned Item [10], a butt joint of the metal member and the resin member can be obtained.

In the bonding method according to the aforementioned Item [11], since the contact face of the metal member which comes into contact with the resin member is subjected to an anodizing treatment, the metal member and the resin member can be further firmly bonded.

In the bonding method according to the aforementioned Item [12], since at least one of mutual contact surfaces of the metal member and the resin member is subjected to a corona discharge treatment before bonding, contaminants on the surface of the metal member can be eliminated, and a polar group such as a hydroxyl group and a carboxyl group can be formed on the surface of the resin member, thereby further firmly bonding the metal member and the resin member.

In the bonded joint of a metal member and a resin member according to the aforementioned Item [13], the effects of the method for bonding a metal member and a resin member according to the present invention is exerted when bonding a metal member and a resin member.

### BRIEF DESCRIPTION OF THE DRAWINGS

Fig. 1 is an explanatory perspective view showing a method for bonding a metal member and a resin member according to a first embodiment of the present invention in a state in which the metal member and the resin member are being lap welded.
Fig. 2A is a cross-sectional view taken along the line X-X in Fig. 1.
Fig. 2B is a cross-sectional view taken along the line Y-Y in Fig. 1.
Fig. 3 is a perspective view explaining a method for lap spot welding a metal member and a resin member as a method for bonding a metal member and a resin member according to a second embodiment of the present invention.
Fig. 4 is a cross-sectional view explaining a method for bonding a metal member and a resin member according to a third embodiment of the present invention in a state in which the metal member and the resin member are being lap welded.
Fig. 5 is a cross-sectional view explaining a method for bonding a metal member and a resin member according to a fourth embodiment of the present invention in a state in which the metal member and the resin member are being butt bonded.
Fig. 6 is a perspective view of a test piece used for a tensile shear test.

### EMBODIMENTS FOR CARRYING OUT THE INVENTION

Next, several embodiments of the present invention will be explained with reference to the drawings.

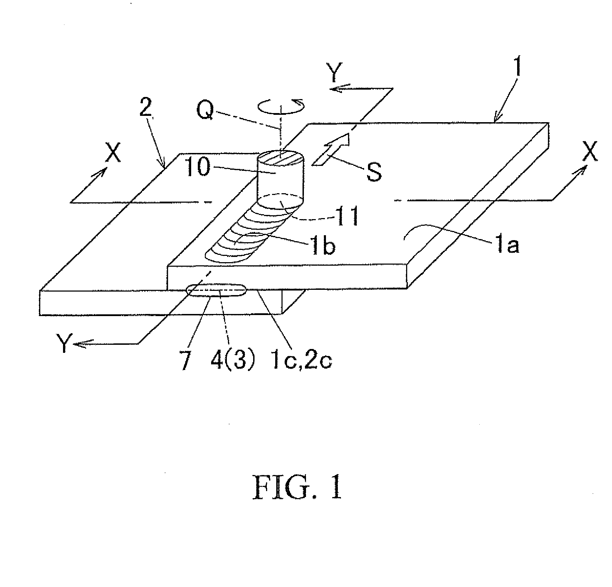

Figs. 1 to 2B are figures explaining a method for bonding a metal member and a resin member according to a first embodiment of the present invention. In these figures, the reference numeral 1 denotes a metal member, and the reference numeral 2 denotes a resin member. In these figures, the metal member 1 and the resin member 2 are depicted to be thick for an easy understanding of the present embodiment.

The metal member 1 is plate-shaped (specifically flat-board-shaped). The material of the metal member 1 is metal, such as, e.g., aluminum, aluminum alloy, magnesium alloy, titanium, titanium alloy, copper, copper alloy, iron, steel, or surface treated steel.

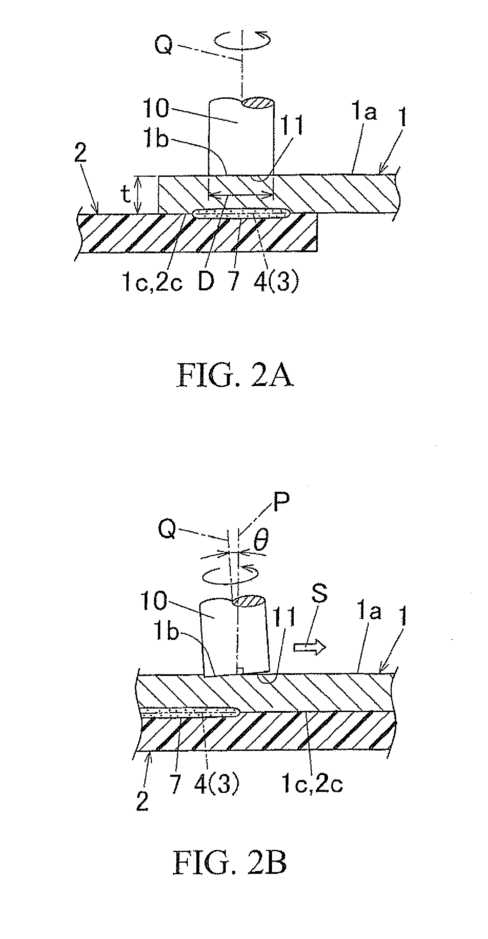

In Fig. 2A, "t" denotes a thickness of the metal member 1. The thickness t of the metal member 1 is not limited, but it is especially preferred to be 0.3 mm or more. The reason for that is, when the thickness t of the metal member 1 is 0.3 mm or more, deformation of the metal member 1 can be assuredly prevented when friction energy is applied to the metal member 1. The upper limit of the thickness t of the metal member 1 is not limited, and is usually 10 mm.

The resin member 2 is plate-shaped (specifically a flat-board-shaped). The material of the resin member 2 is resin, such as, e.g., polyethylene (PE), polypropylene (PP), ethylene-acrylic acid copolymer (EAA), engineering plastic, fluoric resin (example: polytetrafluoroethylene), and ultragiant molecular weight polyethylene. The thickness of the resin member 2 is, for example, 1 to 20 mm. The melting point of the resin member 2 is lower than the melting point of the metal member 1.

In the first embodiment, the thickness t of the metal member 1 and the thickness of the resin member 2 are the same. In the present invention, however, the thickness t of the metal member 1 and the thickness of the resin member 2 are not limited to being equal, and can be different.

In Fig. 1, the resin member 2 is disposed horizontally on a table (not shown) in the atmosphere. An end portion of the metal member 1 disposed horizontally is overlapped with an end portion of the resin member 2 in the atmosphere. In this way, in a state in which the metal member 1 and the resin member 2 are overlapped, a resin layer as an intermediate layer as described in the aforementioned prior art is not interposed between the metal member 1 and the resin member 2. In other words, the metal member 1 and the resin member 2 are in contact with each other (i.e., directly) in an overlapped manner without interposing a resin layer therebetween.

In a state in which the metal member 1 and the resin member 2 are overlapped, friction energy is applied to the metal member 1, not to the resin member 2, to thereby bond the metal member 1 and the resin member 2.

In the first embodiment, a rotation tool 10 is used as a means for applying friction energy to the metal member 1. The rotation tool 10 is preferred to be a rotation tool in which a pin-shaped probe is removed from a rotation tool as a bonding tool used for a friction stir welding method widely used to bond two metal members. That is, the rotation tool 10 is formed into a cylindrical shape and configured to be rotated about an axis Q. Furthermore, a tip end face 11 of the rotation tool 10 constitutes a contact portion which comes into contact with the metal member 1. The tip end face 11 of the rotation tool 10 is formed so that the outer peripheral edge portion exists on a flat surface perpendicular to the axis Q. In the first embodiment, the tip end face 11 is formed perpendicularly to the axis Q. In Fig. 2A, D denotes a diameter of the tip end face 11 of the rotation tool 10.

Furthermore, in the first embodiment, a pin-shape probe, such as, e.g., a pin-shaped probe of a friction stir welding tool, is not protruded from the central portion of the tip end face 11 of the rotation tool 10. The rotation tool 10 is formed with a heat resistant material that is harder than the metal member 1 and can withstand friction heat as friction energy generated at the time of bonding.

When bonding the metal member 1 and the resin member 2, initially, the rotation tool 10 is rotated at a high speed. Then, as shown in Fig. 2B, the rotation tool 10 is inclined so that the inclination angle θ of the axis Q of the rotation tool 10 relative to the normal line P of the surface 1a of the metal member 1 satisfies a condition of 0° <θ ≦ 5°. Further, the tip end face 11 of the rotation tool 10 is pressed downward against the surface (upper face) 1a of the metal member 1 in the atmosphere from the upper side of the metal member 1 so that the metal member 1 and the resin member 2 come into close contact with each other, i.e., the overlapping interface 4 (contact interface 3) of the metal member 1 and the resin member 2 is pressurized. With this, the inclined side portion at the tip end face 11 of the rotation tool 10 is slightly embedded in the surface 1a of the metal member 1, while a portion opposite to the inclined side portion at the tip end face 11 of the rotation tool 10 is slightly lifted up from the surface 1a of the metal member 1, and frictional heat as friction energy is generated on the contact portion 1b of the surface 1a of the metal member 1 which is in contact with the tip end face 11 of the rotation tool 10.

Consequently, the frictional heat is transmitted from the contact portion 1b to the overlapping interface 4 of the metal member 1 and the resin member 2, and the overlapping interface 4 is heated by the frictional heat to a temperature equal to or higher than the melting point of the resin member 2 but below the melting point of the metal member 1, which causes partial melting of the resin member 2 at the overlapping interface 4. Then, while keeping the state in which the tip end face 11 of the inclined rotation tool 10 is pressed against the surface 1a of the metal member 1, the rotation tool 10 is relatively moved along the end portion of the metal member 1, i.e., along the bonding line, toward a side opposite to the inclination direction with respect to the metal member 1. This relative moving direction is the bonding direction S, which is a direction parallel to the surface 1a of the metal member 1. In the first embodiment, with the positions of the metal member 1 and the resin member 2 fixed, the rotation tool 10 is moved in the bonding direction S.

The melted portion of the resin member 2 partially melted at the overlapping interface 4 loses the frictional heat with the movement of the rotation tool 10 to be cooled, which results in partial bonding of the metal member 1 and the resin member 2 at the overlapping interface 4. In Fig. 2A and 2B, the reference numeral "7" denotes a bonded portion of the metal member 1 and the resin member 2. In these figures, the bonded portion 7 is indicated by dot hatching to make it easier to distinguish from other portions. The bonded portion 7 is formed continuously and linearly along the moving path line of the rotation tool 10 as the rotation tool 10 moves. As a result, the bonded area of the metal member 1 and the resin member 2 increases, i.e., the bonding strength increases.

When the tip end face 11 of the rotation tool 10 reaches a predetermined bonding end edge position, the rotation tool 10 is raised relative to the metal member 1 to thereby separate the tip end face 11 of the rotation tool 10 from the surface 1a of the metal member 1 and release pressing of the rotation tool 10 to the metal member 1. This completes the bonding of the metal member 1 and the resin member 2.

As explained above, by bonding the metal member 1 and the resin member 2 at the overlapping interface 4 along the moving path line of the rotation tool 10, a lap joint as a bonded joint of the metal member 1 and the resin member 2 can be obtained.

The bonding conditions of the bonding method according to the aforementioned first embodiment are set according to the types, the thicknesses, etc., of the materials of the metal member 1 and the resin member 2, and are normally set as follows. That is, the diameter D of the tip end face 11 of the rotation tool 10 is 10 to 30 mm, the rotational speed of the rotation tool 10 is 1,000 to 5,000 revolutions/min, and the bonding speed (i.e., traveling speed of the rotation tool 10) is 200 to 1,000 mm/min.

When bonding, the inclination angle θ of the axis Q of the rotation tool 10 relative to the normal line P of the surface 1a of the metal member 1 must satisfy the condition of 0° <θ ≦ 5°. The reasons will be explained later. The inclination angle θ corresponds to an "angle of advance" in the technical field of a friction stir welding.

It is considered that the bonding principle of the bonding method according to the aforementioned first embodiment is as follows.

Generally, a metal oxide film is present on the entire surface of the metal member 1. That is, for example, in cases where the material of the metal member 1 is an aluminum or its alloy, a film of aluminum oxide (Al₂O₃) is present. In the case of a magnesium or its alloy, a film of magnesium oxide (MgO) is present. In the case of a titanium, a film of titanium oxide is present. In the case of a copper, a film of copper oxide is present. In the case of iron or steel, a file of ferrioxide is present. Specifically, it is preferable that at least a contact surface of the metal member 1 in contact with the resin member 2 among the entire surface of the metal member 1 is subjected to an anodizing treatment. This actively exists a metal oxide film on the contact surface of the metal member 1 which comes into contact with the resin member 2, which enables assured bonding of the metal member 1 and the resin member 2.

The material of the resin member 2 includes a high molecular compound in which carbon and hydrogen are linearly lined up or a high molecular compound in which a portion of the hydrogen is replaced with another element or an atomic group. Specifically, the material of the resin member 2 preferably includes a high molecular compound in which a portion of hydrogen is replaced with a carboxyl group (COOH) as an atomic group, from the viewpoint of enabling assured bonding of the metal member 1 and the resin member 2.

By directly overlapping such metal member 1 and resin member 2 and then applying friction energy (frictional heat) to the metal member 1 as in the first embodiment, the overlapping interface 4 of the metal member 1 and the resin member 2 is rapidly heated. With this, it can be considered that H of the carboxyl group (COOH) of the resin member 2 detaches at the overlapping interface 4 and the oxygen in the metal oxide film that is present on the surface of the metal member 1 and the COO- bond, which causes bonding of the metal member 1 and the resin member 2 at the overlapping interface 4. Even in cases where the material of the resin member 2 includes almost no carboxyl group and almost no carboxyl group is present on the surface of the resin member 2, if bonding is done in the atmosphere, the same effects as in the case where the material of the resin member 2 includes a carboxyl group can be obtained.

According to the bonding method of the aforementioned first embodiment, the metal member 1 and the resin member 2 are brought into contact with each other without interposing a resin layer therebetween in an overlapped state, which enables bonding inexpensively and easily for a resin layer being not used, and increases the number of types of the resin member 2 that are bondable with the metal member 1. Furthermore, the metal member 1 and the resin member 2 can be bonded at arbitrary positions.

Furthermore, when bonding, since the inclination angle θ of the axis Q of the rotation tool 10 relative to the normal line P of the surface 1a of the metal member 1 satisfies the condition of 0° <θ ≦ 5°, there are the following advantages.

That is, if θ is 0° (θ=0°), the entire surface of the tip end face 11 of the rotation tool 10 comes into contact with the surface 1a of the metal member 1, resulting in insufficient friction energy needed per unit area for bonding. Furthermore, when relatively moving the rotation tool 10 in the bonding direction S, the frictional heat as friction energy becomes insufficient since the surface 1a of the metal member 1 is in a cut state at the portion opposite to the inclined side portion at the tip end face 11 of the rotation tool 10 (that is, a portion on the front side of the bonding direction S of the tip end face 11) and as a result, the metal member 1 and the resin member 2 cannot be bonded firmly. On the other hand, if θ exceeds 5° (θ>5°), the inclined side portion at the tip end face 11 of the rotation tool 10 is excessively pushed into the metal member 1, reducing the thickness of the metal member 1, which in turn results in decreased bonding strength. Therefore, it is required that θ satisfies the condition of 0° <θ ≦ 5°. This secures friction energy needed per unit area for bonding, resulting in firm bonding of the metal member 1 and the resin member 2, which further prevents decrease in bonding strength due to thinning of the metal member 1.

Furthermore, since the friction energy is frictional heat generated by pressing the rotation tool 10, which is being rotated, against the surface 1a of the metal member 1, the friction energy can be partially and easily applied only to the necessary portions.

Furthermore, it is preferable to use the rotation tool 10 satisfying 5t≦D≦20t (D: diameter of the tip end face 11 of the rotation tool 10; t: thickness of the metal member 1). In this case, metal members 1 of various thicknesses can be assuredly and firmly bonded to the resin member 2.

Furthermore, by heating the overlapping interface 4 of the metal member 1 and the resin member 2 to a temperature equal to or higher than the melting point of the resin member 2 but below the melting point of the metal member 1, the metal member 1 and the resin member 2 can be more assuredly and firmly bonded.

Furthermore, by relatively moving the rotation tool 10 with respect to the metal member 1 toward a side opposite to the inclining direction in a state in which the rotation tool 10 is inclined and the tip end face 11 is pressed against the surface 1a of the metal member 1, the bonded portion 7 of the metal member 1 and the resin member 2 can be formed linearly. With this, the bonding strength of the metal member 1 and the resin member 2 can be improved. In addition, since the relative moving direction of the rotation tool 10 is opposite to the inclined direction of the rotation tool 10, the surface 1a of the metal member 1 can be prevented from being cut at a front side of the bonding direction S of the rotation tool 10 on the surface 1a. With this, friction energy can be assuredly applied to the metal member 1, which in turn can more assuredly bond the metal member 1 and the resin member 2.

Furthermore, in the first embodiment, it is preferable that at least a contact surface 1c of the metal member 1 which comes into contact with the resin member 2 is subjected to an anodizing treatment. In this case, the metal member 1 and the resin member 2 can be more firmly bonded.

Furthermore, it is preferable that at least one of mutual contact surfaces (mutual overlapped surfaces) 1c and 2c of the metal member 1 and the resin member 2 is subjected to a corona discharge treatment before bonding. With this, the metal member 1 and the resin member 2 can be more firmly bonded. A corona discharge treatment is a treatment in which the members 1 and 2 are passed through between an insulated electrode and a dielectric roll, and high frequency and high voltage are applied between the electrode and the dielectric roll to generate corona discharge in the atmosphere. Radical oxygen, etc., occurs with the generation of the corona discharge by irradiating the corona discharge electrons to the contact surfaces 1c and 2c on the members 1 and 2. As a result, contaminants on the contact surface 1c of the metal member 1 are removed and a polar group such as an OH group or a COOH group is formed on the contact surface 2c of the resin member 2 to enhance the bonding of the metal member 1 and the resin member 2. As a result, it becomes possible to more firmly bond the metal member 1 and the resin member 2.

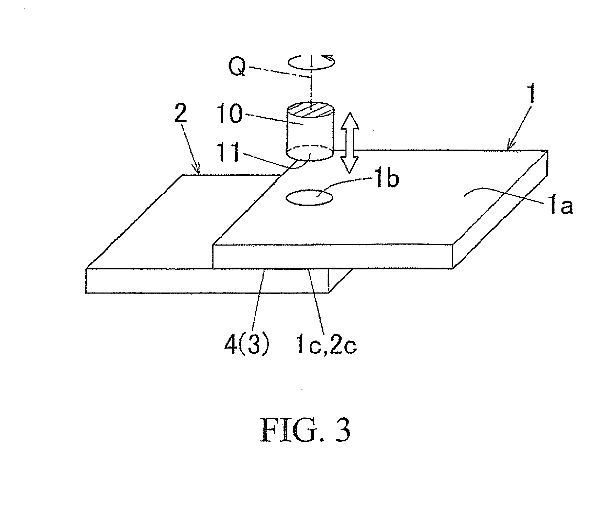

A second embodiment shown in Fig. 3 is directed to a case in which a metal member 1 and a resin member 2 are lap spot welded. The second embodiment will be explained focusing on the differences from the first embodiment.

In the second embodiment, the tip end face 11 of the rotation tool 10, which is being rotated, is pressed against the surface 1a of the metal member 1 with the rotation tool 10 inclined, and then the rotation tool 10 is relatively raised with respect to the metal member 1 without moving the rotation tool 10 relatively to the metal member 1 in a direction parallel to the surface 1a of the metal member 1, to thereby separate the tip end face 11 of the rotation tool 10 from the surface 1a of the metal member 1 and release the rotation tool 10 from being pressed against the metal member 1. In this way, the metal member 1 and the resin member 2 are bonded at the mutual overlapping interface 4 in a spotted manner, not in a linear manner. As a result, a lap spot welding of the metal member 1 and the resin member 2 can be obtained. The other steps of the second embodiment are the same as those of the aforementioned first embodiment.

In the second embodiment, by the similar reasons as those of the first embodiment, it is preferable that the contact surface 1c of the metal member 1 which comes into contact with the resin member 2 is subjected to an anodizing treatment. Furthermore, it is preferable that at least one contact surface (overlapped surface) among the mutual contact surfaces (mutual overlapped surfaces) 1c and 2c of the metal member 1 and the resin member 2 is subjected to a corona discharge treatment before bonding.

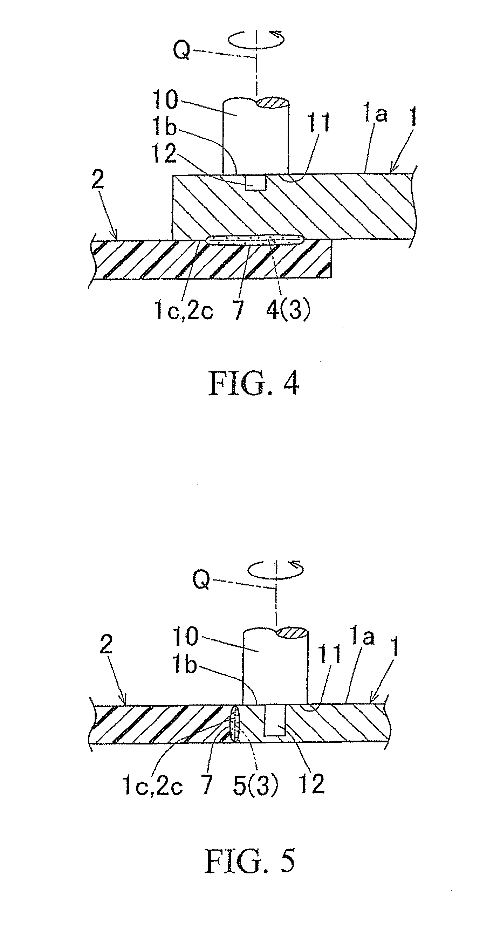

A third embodiment shown in Fig. 4 is directed to a case in which the metal member 1 is thick. The third embodiment will be explained focusing on the differences from the aforementioned first embodiment.

In the third embodiment, the thickness of the metal member 1 is thicker than the thickness of the metal member of the first embodiment. The rotation tool 10 is constituted so that, at the central portion of the tip end face 11 of the rotation tool 10, a pin-shaped probe 12 having a diameter smaller than the diameter of the tip end face 11 is integrally protruded along the axis Q of the rotation tool 10, and when the rotation tool 10 rotates, the probe 12 integrally rotates with the rotation tool 10. The cross-sectional shape of the probe 12 can be, e.g., circular, elliptical, or polygonal. The length of the probe 12 is set to be shorter than the thickness of the metal member 1.

In Fig. 4, the tip end face 11 of the rotating rotation tool 10 is pressed against the surface 1a of the metal member 1 in a state in which the rotation tool 10 is inclined relative to the normal line of the surface 1a of the metal member 1, and the rotating probe 12 is embedded into the metal member 1 when the tip end face 11 of the rotation tool 10 is pressed against the surface 1a of the metal member 1.

In the third embodiment, the overlapping interface 4 of the metal member 1 and the resin member 2 is heated to a temperature equal to or higher than the melting point of the resin member 2 but below the melting point of the metal member 1 by first frictional heat as first friction energy generated by pressing the tip end face 11 of the rotation tool 10 against the surface 1a of the metal member 1, and second frictional heat as second friction energy generated by stirring the material of the metal member 1 with a probe 12 embedded in the metal member 1. In this way, the metal member 1 and the resin member 2 are bonded at the overlapping interface 4. As a result, a lap joint of the metal member 1 and the resin member 2 can be obtained. The other steps of the third embodiment are the same as the aforementioned first embodiment.

In the third embodiment, by the similar reasons as in the first embodiment, it is preferable that the contact surface 1c of the metal member 1 which comes into contact with the resin member 2 is subjected to an anodizing treatment. Furthermore, it is preferable that at least one contact surface (overlapped surface) among the mutual contact surfaces (mutual overlapped surfaces) 1c and 2c of the metal member 1 and the resin member 2 is subjected to a corona discharge treatment before bonding.

A fourth embodiment shown in Fig. 5 is directed to a case in which the metal member 1 and the resin member 2 are butt bonded. The fourth embodiment will be explained focusing on the differences from the aforementioned first embodiment.

In the fourth embodiment, the metal member 1 and the resin member 2 are disposed horizontally on a table (not shown) in the atmosphere with the metal member 1 and the resin member 2 abutted without interposing a resin layer therebetween. That is, the end face of the end portion of the metal member 1 and the end face of the end portion of the resin member 2 are directly in contact with each other.

Similarly to the rotation tool 10 of the third embodiment, at the central portion of the tip end face 11 of the rotation tool 10, a pin-shaped probe 12 having a diameter smaller than the diameter of the tip end face 11 is integrally protruded along the axis Q of the rotation tool 10. The length of the probe 12 is set to be shorter than the thickness of the metal member 1.

In Fig. 5, the tip end face 11 of the rotating rotation tool 10, which is being rotated, is pressed against the surface 1a of the metal member 1 near the abutting interface 5 (contact interface 3) of the metal member 1 and the resin member 2, in a state in which the rotation tool 10 is inclined with respect to the normal line of the surface 1a of the metal member 1. The rotating probe 12 is embedded into the metal member 1 when the tip end face 11 of the rotation tool 10 is pressed against the surface 1a of the metal member 1. In the fourth embodiment, the abutting interface 5 of the metal member 1 and the resin member 2 is heated to a temperature equal to or higher than the melting point of the resin member 2 but below the melting point of the metal member 1 by first frictional heat as first friction energy generated by pressing the tip end face 11 of the rotation tool 10 against the surface 1a of the metal member 1, and second frictional heat as second friction energy generated by stirring the material of the metal member 1 with the probe 12 embedded into the metal member 1. In this way, the metal member 1 and the resin member 2 are bonded at the abutting interface 5. Furthermore, the rotation tool 10 is moved with respect to the metal member 1 in a direction parallel to a direction in which the abutting interface 5 extends. In this way, a bonded portion 7 is formed linearly. As a result, a butt joint of the metal member 1 and the resin member 2 can be obtained. The other steps of the fourth embodiment are the same as those of the first embodiment.

In the fourth embodiment, by the similar reasons as in the first embodiment, it is preferable that the contact surface 1c of the metal member 1 which comes into contact with the resin member 2 is subjected to an anodizing treatment. Furthermore, it is preferable that at least one contact surface (overlapped surface) among the mutual contact surfaces (mutual overlapped surfaces) 1c and 2c of the metal member 1 and the resin member 2 is subjected to a corona discharge treatment before bonding.

According to the third and fourth embodiments, since the probe 12 is protruded from the tip end face 11 of the rotation tool 10, even if the metal member 1 is thick and/or the contact interface 3 (that is, the overlapping interface 4 or the abutting interface 5) of the metal member 1 and the resin member 2 is significantly separated from the contact portion 1b of the metal member 1 with which the rotation tool 10 comes in contact, the contact interface 3 of the metal member 1 and the resin member 2 can be assuredly heated, to thereby further assuredly and firmly bond the metal member 1 and the resin member 2. The length of the probe 12 of the rotation tool 10 is set according to the thickness of the metal member 1 and the distance between the contact portion 1b of the metal member 1 which comes into contact with the rotation tool 10 to the contact interface 3 of the metal member 1 and the resin member 2.

While several embodiments of the present invention have been explained, the present invention is not limited to the embodiments described herein and allows various design-changes falling within the scope of the present invention unless it deviates from the spirits of the invention.

Also, in the present invention, the rotation tool 10 used for the first and second embodiments can have a protruding probe 12 at the tip end faces 11 like the rotation tool used for the third embodiment.

Also, in the present invention, bonding can be performed by moving the metal member 1 and the resin member 2 with the position of the rotation tool 10 fixed.

### EXAMPLES

Next, specific Examples and Comparative Examples of the present invention will be explained. It should be, however, noted that the present invention is not specifically limited to these Examples. Hereinafter, the same reference numerals are used as the first embodiment for easy understanding of Examples and Comparative Examples.

**[Table 1]**

| | Material of metal member | Material of resin member | Inclination angle θ (°) | Tensile shearing test result |
|---|---|---|---|---|
| Ex. 1 | Al alloy A2017 | EAA | 3 | ○ |
| Ex. 2 | Al alloy AC4C | EAA | 3 | ○ |
| Ex. 3 | Al alloy A2017 (anodizing treated) | EAA | 3 | ○ |
| Ex. 4 | Al alloy A2017 (anodizing treated) | PE | 3 | ○ |
| Ex. 5 | Mg alloy AZ31 | EAA | 3 | ○ |
| Ex. 6 | Al alloy A2017 | EAA | 1 | ○ |
| Ex. 7 | Al alloy AC4C | EAA | 1 | ○ |
| Ex. 8 | Al alloy A2017 (anodizing treated) | EAA | 1 | ○ |
| Ex. 9 | Al alloy A2017 (anodizing treated) | PE | 1 | ○ |
| Ex. 10 | Mg alloy AZ31 | EAA | 1 | ○ |
| Ex. 11 | Al alloy A2017 | EAA | 5 | ○ |
| Ex. 12 | Al alloy AC4C | EAA | 5 | ○ |
| Ex. 13 | Al alloy A2017 (anodizing treated) | EAA | 5 | ○ |
| Ex. 14 | Al alloy A2017 (anodizing treated) | PE | 5 | ○ |
| Ex. 15 | Mg alloy AZ31 | EAA | 5 | ○ |
| Com. Ex. 1 | Al alloy A2017 | EAA | 0 | × |
| Com. Ex. 2 | Al alloy AC4C | EAA | 0 | × |
| Com. Ex. 3 | Al alloy A2017 (anodizing treated) | EAA | 0 | × |
| Com. Ex. 4 | Al alloy A2017 (anodizing treated) | PE | 0 | × |
| Com. Ex. 5 | Mg alloy AZ31 | EAA | 0 | × |
| Com. Ex. 6 | Al alloy A2017 | EAA | 6 | Δ |
| Com. Ex. 7 | Al alloy AC4C | EAA | 6 | Δ |
| Com. Ex. 8 | Al alloy A2017 (anodizing treated) | EAA | 6 | Δ |
| Com. Ex. 9 | Al alloy A2017 (anodizing treated) | PE | 6 | Δ |
| Com. Ex. 10 | Mg alloy AZ31 | EAA | 6 | Δ |

### <Examples 1 to 15, Comparative Examples 1 to 10>

Flat-board-shaped metal members 1 made of various materials and flat-board-shaped resin members 2 made of various materials were prepared. The materials of the prepared metal member 1 and the resin member 2 are indicated in the columns of "Material of metal member" and "Material of resin member" in Table 1.

In the column of "Material of metal member" in Table 1, the numerical reference after the term "Al alloy" is an aluminum alloy designation. Aluminum alloy designation "A2017" is an expanded material and "AC4C" is a cast material. "Anodizing treated" means that the entire surface of the metal member of an aluminum alloy was subjected to an anodizing treatment using a known method. The reference "AZ31" after the term "Mg alloy" is a magnesium alloy designation. The melting point of the aluminum alloy A2017 is 640 °C and the melting point of AC4C is 610 °C. The melting point of the magnesium alloy AZ31 is 632 °C. The dimensions of the metal member 1 are 150 mm in length x 75 mm in width x 1.5 mm in thickness.

In the column of "Material of resin member," "EAA" means ethylene-acrylic copolymer and "PE" means polyethylene. The melting point of EAA is 100 to 104 °C and the melting point of PE is 132 °C. The dimensions of the resin member 2 are 150 mm in length x 75 mm in width x 1.7 mm in thickness.

Next, as shown in Figs. 1 to 2B, an end portion of the metal member 1 in a width direction was placed on an end portion of the horizontally disposed resin member 2 in a width direction in the atmosphere, and the metal member 1 and the resin member 2 were directly overlapped without interposing a resin layer therebetween. The overlapping width was 50 mm. The metal member 1 and the resin member 2 were linearly bonded at the mutual overlapping interface 4 using the rotation tool 10 under the following conditions according to the bonding method of the first embodiment to thereby obtain a lap joint of the metal member 1 and the resin member 2.

The bonding conditions were the following.

The diameter D of the tip end face 11 of the rotation tool 10: 15 mm
The inclination angle θ of the rotation tool 10: as described in the column of "Inclination angle θ" in Table 1
The rotation speed of the rotation tool 10: 1,000 revolutions/min
The bonding speed: 400 mm/min
Embedding depth of the tip end face 11 of the rotation tool 10 into the metal member 1: 0.5 mm

Also, since the diameter D of the tip end face 11 of the rotation tool 10 was 15 mm and the thickness t of the metal member 1 was 1.5 mm, D=10t. Therefore, the rotation tool 10 satisfied the condition of 5t≦D≦20t.

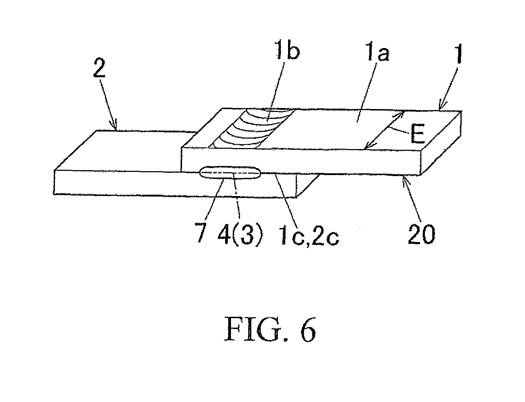

Next, by cutting the lap joint at a width E= 15 mm in the direction perpendicular to the bonding direction S, a test piece 20 as shown in Fig.6 was obtained from the lap joint. Then, a tensile shear testing was conducted for the test piece 20. In other words, the metal member 1 and the resin member 2 of the test piece 20 were pulled in opposite directions so that shearing force was applied to the bonded portions 7 of both members, and the load at the time of breakage due to the force was measured as the tensile shearing load. The results are shown in the column of "Tensile shearing test result" in Table 1. In the same column, ○, Δ, and X mean the following.

○: Maximum tensile shearing load per unit bonding length was equal to or higher than 15 N/mm
Δ: Maximum tensile shearing load per unit bonding length was below 15 N/mm
×: Not bondable

### [Evaluation]

As it can be understood from Table 1, when the inclination angle θ of the axis Q of the rotation tool 10 was set to 0° <θ ≦ 5° (more preferably 1° ≦θ ≦ 5°), the maximum tensile shearing load was comparatively higher and therefore the bonding strength of the metal member 1 and the resin member 2 were stronger. On the other hand, when θ was 0°, the metal member 1 and the resin member 2 could not be bonded. Also, when θ exceeded 5°, the maximum tensile shearing load was comparatively lower and therefore the bonding strength of the metal member 1 and the resin member 2 was lower.

Furthermore, even when the metal member 1 was subjected to an anodizing treatment, the metal member 1 and the resin member 2 could be firmly bonded.

The present invention claims priority to Japanese Patent Application No. 2011-35001 filed on February 21, 2011, the entire disclosure of which is incorporated herein by reference in its entirety.

The terms and descriptions used herein are used only for explanatory purposes and the present invention is not limited to them. The present invention allows various design-changes falling within the claimed scope of the present invention unless it deviates from the spirits of the invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example;" and "NB" which means "note well."

### INDUSTRIAL APPLICABILITY

The present invention can be applied to a method for bonding a metal member and a resin member and a bonded joint of a metal member and a resin member used in the fields of, e.g., automobiles, architecture, electronic, and aerospace.

### DESCRIPTION OF THE REFERENCE NUMERALS

1: metal member
1a: surface of the metal member
2: resin member
2a: surface of the resin member
3: contact interface
4: overlapping interface
5: abutting interface
7: bonded portion
10: rotation tool
11: tip end face of the rotation tool
Q: axis of the rotation tool
P: normal line of the surface of the metal member

## Claims

1. A method for bonding a metal member and a resin member, the method comprising:
arranging the metal member and the resin member in contact with each other without interposing a resin layer therebetween; and
pressing a rotation tool, which is being rotated, against a surface of the metal member in an inclined state so that an inclination angle θ of an axis of the rotation tool relative to a normal line of the surface of the metal member satisfies a condition of 0° <θ ≦ 5° to thereby bond the metal member and the resin member by friction energy given to the metal member.

2. The method for bonding a metal member and a resin layer as recited in claim 1, wherein the rotation tool satisfies a condition of 5t≦D≦20t, where 'D' is a diameter of a tip end face of the rotation tool, and 't' is a thickness of the metal member.

3. The method for bonding a metal member and a resin layer as recited in claim 1, wherein the rotation tool is pressed against the surface of the metal member in an atmosphere.

4. The method for bonding a metal member and a resin layer as recited in claim 1, wherein a contact interface of the metal member and the resin member is heated to a temperature equal to or higher than a melting point of the resin member but below a melting point of the metal member by the friction energy to bond the metal member and the resin member.

5. The method for bonding a metal member and a resin layer as recited in claim 1, wherein, in a state in which the rotation tool is pressed against the surface of the metal member in an inclined state, the rotation tool is moved relative to the metal member in a direction opposite to a direction of an inclination of the rotation tool.

6. The method for bonding a metal member and a resin layer as recited in claim 1, wherein a probe having a diameter smaller than a diameter of a tip end face of the rotation tool is protruded from the tip end face, and
wherein the metal member and the resin member are bonded by the friction energy and second friction energy generated by stirring a material of the metal member with the probe embedded into the metal member when pressing the rotation tool against the metal member.

7. The method for bonding a metal member and a resin layer as recited in claim 1, wherein the metal member and the resin member are brought into contact with each other in an overlapped manner without interposing a resin layer therebetween.

8. The method for bonding a metal member and a resin layer as recited in claim 1,
wherein the metal member and the resin member are brought into contact with each other in an overlapped manner without interposing a resin layer therebetween, and
wherein the rotation tool is pressed against the surface of the metal member in an inclined state, and thereafter pressing of the rotation tool against the metal member is released without moving the rotation tool relative to the metal member in a direction parallel to the surface of the metal member to thereby lap spot weld the metal member and the resin member.

9. The method for bonding a metal member and a resin layer as recited in claim 8,
wherein a probe having a diameter smaller than a diameter of a tip end face of the rotation tool is protruded from the tip end face, and
wherein the metal member and the resin member are bonded by the friction energy and a second friction energy generated by stirring a material of the metal member with the probe embedded into the metal member when pressing the rotation tool against the metal member.

10. The method for bonding a metal member and a resin layer as recited in claim 1, wherein the metal member and the resin member are brought into contact with each other in an abutted state without interposing a resin layer therebetween.

11. The method for bonding a metal member and a resin layer as recited in claim 1, wherein a contact face of the metal member which comes into contact with the resin member is subjected to an anodizing treatment.

12. The method for bonding a metal member and a resin layer as recited in claim 1, wherein at least one of mutual contact surfaces of the metal member and the resin member is subjected to a corona discharge treatment before bonding.

13. A bonded joint of a metal member and a resin member obtained by the method for bonding a metal member and a resin layer as recited in claim 1.
